Europäisches Patentamt

European Patent Office

Office européen des brevets

(19)

(11) Veröffentlichungsnummer : **0 113 884**
**B1**

(12) **EUROPÄISCHE PATENTSCHRIFT**

(45) Veröffentlichungstag der Patentschrift :
27.07.88

(21) Anmeldenummer : 83112587.7

(22) Anmeldetag : 14.12.83

(51) Int. Cl.⁴ : **H 04 Q 11/04, H 04 Q 3/54**

(54) Fernmeldeanlage, insbesondere Fernsprechnebenstellenanlage, mit Teilnehmer- und Leitungsübertragungsgruppen und Schnittstellenbaugruppen.

(30) Priorität : 22.12.82 DE 3247598
21.01.83 DE 3301979
21.01.83 DE 3301996
21.01.83 DE 3301966
28.01.83 DE 3302920

(43) Veröffentlichungstag der Anmeldung :
25.07.84 Patentblatt 84/30

(45) Bekanntmachung des Hinweises auf die Patenterteilung : 27.07.88 Patentblatt 88/30

(84) Benannte Vertragsstaaten :
AT BE CH DE FR GB IT LI NL SE

(56) Entgegenhaltungen :
DE-A- 3 202 971
INTERNATIONAL SWITCHING SYMPOSIUM, Montreal, 21-25. September 1981, New York, US, W. STROBELT: "Digital switching in private networks", Session 23C, pp. 1-7
INTERNATIONAL SWITCHING SYMPOSIUM, Montreal, 21.-25. September 1981, New York, US, F.J. SCHRAMEL et al.: "The peripheral control domain, an alldigital intelligent terminal for subscribers and trunks in the PRX/D system", Session 34A, pp. 1-9
INTERNATIONAL SWITCHING SYMPOSIUM, Montreal, 21-25. September 1981, New York, US, M. BALLARD et al.: "The E10.S-TSS.5: A multipurpose digital switching system", Session 14A, pp. 1-9

(73) Patentinhaber : **Siemens Aktiengesellschaft Berlin und München**
**Wittelsbacherplatz 2**
**D-8000 München 2 (DE)**

(72) Erfinder : **Beckinger, Günther**
**Im Tann 7**
**D-8034 Unterpfaffenhofen (DE)**
Erfinder : **Egler, Gerhard**
**Makartstrasse 15**
**D-8000 München 71 (DE)**
Erfinder : **Rambold, Thomas**
**Guardinistrasse 139**
**D-8000 München 70 (DE)**

Jouve, 18, rue St-Denis, 75001 Paris, France

**Beschreibung**

Aus der Zeitschrift « telcom report 2 » (1979), Heft 3, Seiten 174 bis 183 ist eine Architektur einer neuen Linie digitaler öffentlicher Fernsprechvermittlungen bekannt, bei der Teilnehmer und Leitungsübertragungsgruppen über jeweils eine gemeinsame Schnittstellenbaugruppe pro solcher Gruppe mit einem Sprechwegekoppelnetzwerk in Verbindung stehen. Die Sprachinformationen werden über das Sprechwegekoppelnetzwerk im Pulscodemodulationsverfahren übertragen. Die anderen Informationen, die für die Verbindungswegeherstellung erforderlich sind und die zu einem der Gruppe zugeordneten Gruppenprozessor zu übertragen sind, werden über getrennter Datenübertragungsleitungen direkt diesen Gruppenprozessor zugeführt, während die anderen Informationen, die für die Verbindungswegeherstellung und die Verarbeitung in der zentralen Steuerung erforderlich sind, über getrennte Datenübertragungsleitungen und über einen Gruppenkoppler und das gemeinsame Koppelnetz zwischen den Schnittstellenbaugruppen und der zentralen Steuerung bzw. zwischen den Gruppenprozessoren und der zentralen Steuerung ausgetauscht werden. Die über das Sprechwegekoppelnetzwerk übertragenen Sprachinformationen werden im Pulscodemodulationsverfahren übertragen. Die Informationen, die über die besonderen Datenübertragungsleitungsbündel bzw. über die zentralen Zeichenkanäle gegeben werden, werden in einem Nachrichtenformat mit variabler Datenlänge (HDLC-Prozedur) übertragen.

Ferner ist aus der Zeitschrift NEC Research und Development, Nr. 64, Januar 1982, Seite 86 bis Seite 93, ein NEAX 61 digitales Übertragungssystem bekannt, bei dem über besondere Übertragungswege, die zum Teil auch Sprachübertragungswege enthalten, zwischen zentralen Steuerungen (RLOC und HDTIC) Informationen ausgetauscht werden. Die Sprachinformationen werden im Pulscodemodulationsverfahren übertragen. Die zwischen den zentralen Steuerungen zu übertragenden Informationen werden vom Nachrichtenformat mit variabler Datenlänge umgesetzt in Pulscodeinformationen und über den genannten Übertragungsweg in einem bestimmten Pulsrahmen bestimmter Länge übertragen. Der vorgenannte Informationsaustausch zwischen den zentralen Steuerungen erfolgt dabei nicht über die Schnittstellenbaugruppen, die in diesem beschriebenen System in analoger Technik arbeiten.

Die Erfindung bezieht sich auf eine Fernmeldeanlage, insbesondere Fernsprechnebenstellenanlage, mit Teilnehmer- und Leitungsübertragungsgruppen, wobei die jeweiligen Gruppen und kombinierte Teilnehmer-/Leitungsübertragungsgruppen über jeweils eine gemeinsame Schnittstellenbaugruppe pro solcher Gruppe sowohl mit einem Sprechwegekoppelnetzwerk als auch über ein Datenübertragungsleitungsbündel mit einer für die Verbindungswegeherstellung der ankommend bzw. abgehend belegbaren Teilnehmer- bzw. Verbindungsleitungen vorgesehenen zentralen Steuerung in Verbindung stehen und wobei Informationen über das Sprechwegekoppelnetzwerk im Pulscodemodulationsverfahren und Informationen über das Datenübertragungsleitungsbündel in 'einem Nachrichtenformat mit variabler Datenlänge übertragen werden und wobei ferner jede Schnittstellenbaugruppe eine Schnittstellenschaltung zur Abwicklung des Sprach- und Signalinformationsverkehrs mit den Teilnehmern und/oder Verbindungsleitungen zugeordneten Anschlußbaugruppen aufweist und die Übertragung dieser Sprach- und Signalinformationen in Abhängigkeit von Steuerbefehlen der zentralen Steuerung und einer der Schnittstellenbaugruppe zugeordneten, über ein schnittstellenbaugruppeninternes Datenübertragungsleitungsbündel mit der Schnittstellenschaltung, mit dem Sprechwegekoppelnetzwerk und mit dem Datenübertragungsleitungsbündel in Verbindung stehenden peripheren Steuerung erfolgt.

Eine derartige Fernmeldeanlage ist aus INTERNATIONAL SWITCHING SYMPOSION, Montreal, 21. bis 25. September 1981, New York, US, W. Strobelt : « Digital switching in private networks », Session 23 C, Paper 2, Seiten 1 bis 7, bekannt.

Die Aufgabe der vorliegenden Erfindung besteht darin, in einfacher Weise eine voll integrierbare Schnittstellenbaugruppe für Teilnehmer- und Leitungsübertragungsgruppen und für kombinierte Teilnehmer-/Leitungsübertragungsgruppen zu bilden, über die mit einer eigenen peripheren Steuerung sowohl eine Übertragung der Sprach- als auch eine Übertragung der Signalinformationen erfolgen kann.

Dies wird dadurch erreicht, daß das schnittstellenbaugruppenindividuelle Datenübertragungsleitungsbündel als Bussystem ausgelegt ist, mit dem
— eine periphere Schnittstellenschaltung für die periphere Steuerung,
— Zeit- und Steuerschaltmittel für das Senden und Empfangen pulscodierter Sprachinformationen,
— eine dem Datenübertragungsleitungsbündel zugeordnete Sende- und Empfangseinrichtung für den Empfang und das Senden von Informationen zwischen der zentralen Steuerung und der peripheren Steuerung in einem Nachrichtenformat mit variabler Datenlänge (HDLC-Prozedur)
— und ein für die Aufnahme von Informationen im Nachrichtenformat mit variabler Datenlänge vorgesehener Speicher, in dem diese Informationen zwischengespeichert und in Abhängigkeit von der peripheren Steuerung der Sende- und Empfangseinrichtung zugeführt und der in Abhängigkeit von den Zeit- und Steuerschaltmitteln für das pulscodierte Senden über das Sprechwegekoppelnetzwerk bzw. für das Umsetzen pulscodiert über das Sprechwegekoppelnetzwerk empfangener Signale bereitgestellt wird, verbunden sind.

Insbesondere durch den Einsatz eines Bussystems in den Schnittstellenbaugruppen und die Möglichkeit des Zugriffs der peripheren Steuerung, von Zeit- und Steuerschaltmitteln einer HDLC-Prozedur-Sende- und Empfangseinrichtung und eines Speichers für im HDLC-Protokoll übertragene Informationen auf das Bussystem, ist ein derartiges Zusammenwirken der notwendigen Einrichtungen möglich, daß eine Integrierbarkeit in einem Baustein gegeben ist.

Weitere wesentliche Vorteile der erfindungsgemäßen Fernmeldeanlage bestehen darin, daß ein schneller Datenaustausch zwischen der peripheren Steuerung und der zentralen Steuerung möglich ist und daß mit der voll integrierbaren Schnittstellenbaugruppe in einfacher Weise die im Nachrichtenformat mit variabler Datenlänge vorhandenen Informationen sowohl über das vorgesehene Datenübertragungsleitungsbündel als auch über die vorhandenen Sprechwege nach Umsetzung im Pulscodemodulationsverfahren übertragen werden können, wobei durch letzteren Vorteil die Möglichkeit gegeben ist, endgeräteindividuelle Informationen von beliebigen Endstellen zu beliebigen anderen Endstellen zu übertragen, ohne daß hierfür gesonderte, kostspielige Umsetzeinrichtungen an den Endstellen erforderlich sind.

Nachstehend ist die Erfindung anhand eines in drei Figuren dargestellten Ausführungsbeispiels beschrieben.

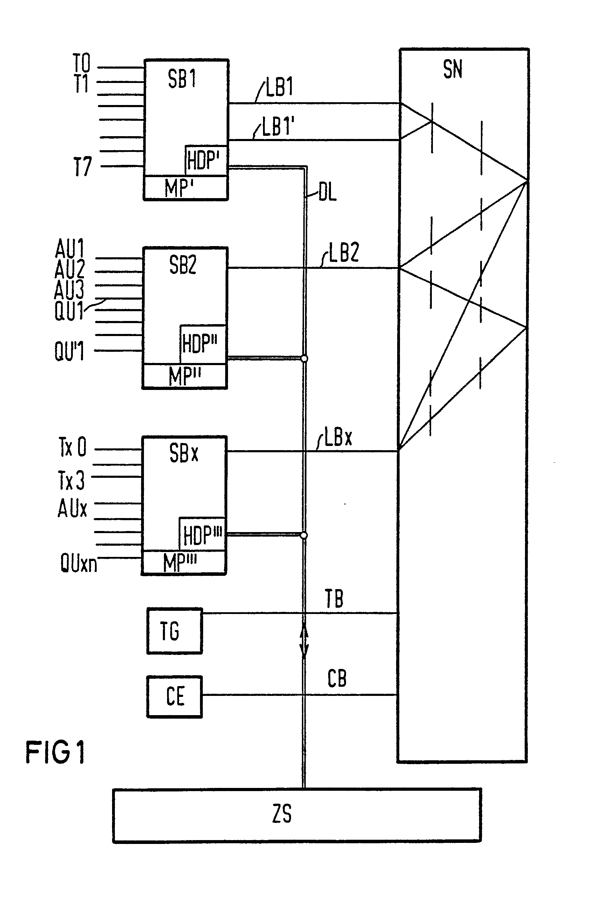

Die Fig. 1 zeigt eine digitale Fernsprechnebenstellenanlage in vereinfachter Darstellung, anhand der die Funktionen des Verbindungsaufbaus erläutert sind. In diesem Zusammenhang wird auch auf die Veröffentlichung in der in der Einleitung genannten Zeitschrift « telcom report 2 » verwiesen.

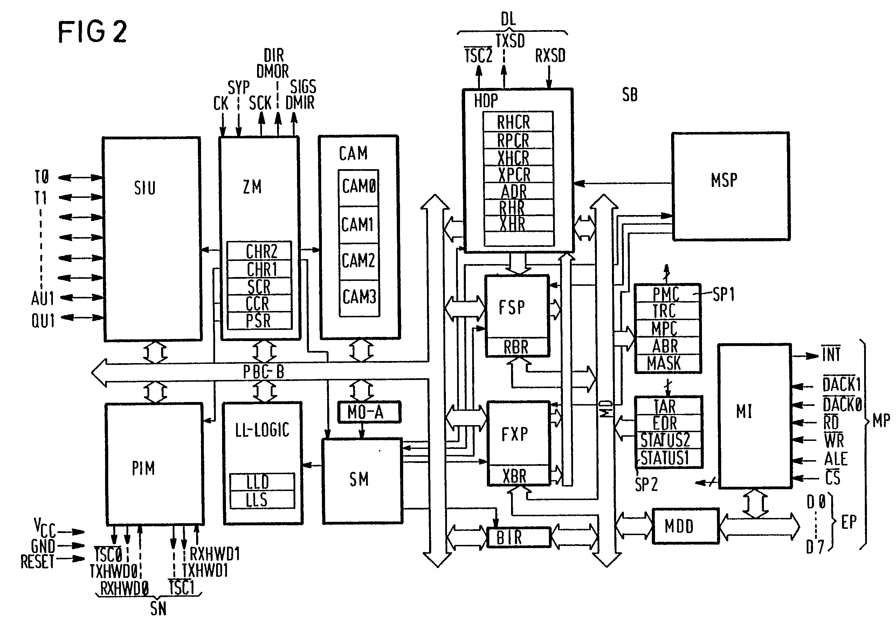

Aus der Fig. 2 sind die Einzelheiten der Schnittstellenbaugruppe entnehmbar, die nachfolgend beschrieben sind.

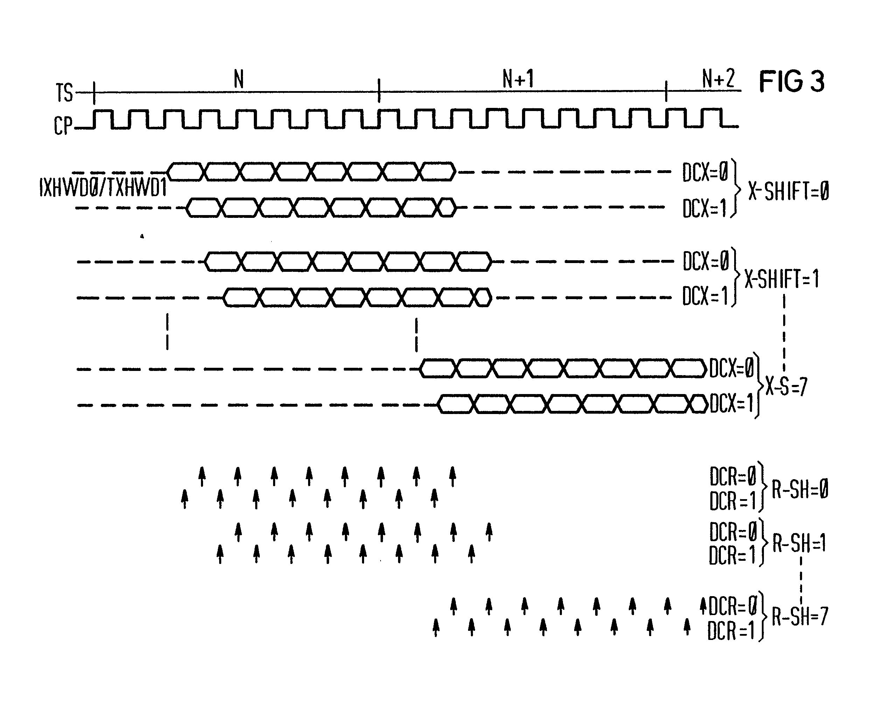

Die Fig. 3 zeigt Pulsdiagramme und Zeichenkombinationen, die für den Informationsaustausch in der beschriebenen Schnittstellenbaugruppe verwendet werden.

In der Fig. 1 ist eine digitale Fernsprechnebenstellenanlage mit drei Schnittstellenbaugrupen gezeigt. An der Schnittstellenbaugruppe SBl sind acht Teilnehmerstellen anschaltbar. Es können aber auch mit einer besonderen Maßnahme bis zu 16 Teilnehmerstellen angeschlossen werden. An die Schnittstellenbaugruppe SBl sind Verbindungsleitungen unterschiedlicher Art, z. B. Amtsleitungen und Querverbindungsleitungen, anschaltbar, und zwar auch acht solcher Leitungen. An die Schnittstellenbaugruppe SBx sind drei Teilnehmerstellen und vier Verbindungsleitungen anschaltbar. Jede Schnittstellenbaugruppe ist über entsprechende Leitungsbündel LB1 bzw. LB2 bzw. LBx mit dem Sprechwegekoppelnetzwerk SN und über das gemeinsame Datenübertragungsleitungsbündel DL mit der zentralen Steuerung ZS der Nebenstellenanlage verbunden. Über jedes der Leitungsbündel LB1 bzw. LB2 bzw. LBx sind der Sprachübertragung entsprechende Informationen und, wie nachstehend beschrieben wird, auch andere Daten im Pulscodemodulationsverfahren übertragbar. Der Informationsaustausch erfolgt über das Sprechwegekoppelnetzwerk SN zwischen angeschalteten Teilnehmerstellen der Nebenstellenanlage bzw. zwischen angeschalteten Verbindungsleitungsübertragungen bzw. zwischen Teilnehmerstellen und Verbindungsleitungsübertragungen. Über das Sprechwegekoppelnetzwerk sind auch zusätzliche, nicht dargestellte Einrichtungen wie Zusatzspeicher, Tongeneratoren, MFC-Empfänger, Prüfschnittstellen, Dateneinrichtungen usw. anschaltbar.

Der Verbindungsaufbau läuft im Prinzip folgendermaßen ab : Die Schnittstellenbaugruppe erkennt, wenn ein Teilnehmer abhebt. Er verbindet diesen rufenden Teilnehmer über das Sprechwegekoppelnetzwerk mit einem Tongenerator, z. B. TG und mit einem Ziffernempfänger CE. Mit den gewählten Ziffern wird der Verbindungswunsch dem zentralen Steuerwerk ZS mitgeteilt, der die Vollständigkeit einer Kennzahl und die entsprechende Berechtigung der anrufenden Teilnehmerstelle bzw. der ankommend belegten Verbindungsleitungsübertragung prüft. Von der zentralen Steuerung wird wie bei der Verbindungsherstellung zum Tongenerator und zum Ziffernempfänger auch der weitere Verbindungsaufbau zur anzurufenden Teilnehmerstelle bzw. zur zu belegenden Verbindungsleitungsübertragung hergestellt. Falls erforderlich werden Informationen der Schnittstellenbaugruppe in Abhängigkeit von Befehlen der zentralen Steuerung ZS zu einer anderen Schnittstellenbaugruppe über das Datenübertragungsleitungsbündel DL übertragen. Gegebenenfalls werden auch über das Sprechwegekoppelnetzwerk Daten von der einen Schnittstellenbaugruppe zur anderen Schnittstellenbaugruppe bzw. über die Verbindungsleitungsübertragungen weitergegeben. Letzteres ist von größerer Bedeutung, da nur über diesen Weg in einfacher Weise ohne zusätzliche Verbindungsleitungen ein Datenaustausch möglich ist. Bei der gezeigten Darstellung ist davon ausgegangen, daß den Teilnehmerendstellen bereits Umsetzeinrichtungen für die Umsetzung analoger Informationen in digitale Informationen und umgekehrt (sogenannte CODEC) zugeordnet sind. Die weitere Funktionsanpassung erfolgt in den dargestellten Schnittstellenbaugruppen. Für die Umsetzung von analogen Signalen analoger Teilnehmerstellen bzw. analoger Verbindungsleitungsübertragungen können der Schnittstellenschaltung der Schnittstellenbaugruppe entsprechende Umsetzschaltmittel (CODEC) zugeordnet werden.

Die Übertragung der Sprachinformationen zum Sprechwegekoppelnetzwerk SN erfolgt über die PCM-Schnittstellenschaltung PIM. Es wird beispielsweise das Übertragungssystem PCM 30 verwendet, bei dem die gleichzeitige Übertragung von 30 Gesprächen z. B. über zwei symmetrische Adernpaare möglich ist. Für jeden der 30 Sprechkreise werden in beiden Richtung 8 000 Abtastwerte pro Sekunde in Form von 8-bit-Codewörtern übertragen. In jeder Richtung müssen also innerhalb von 125 µs hintereinander 30 Codewörter mit je 8 Bit übertragen werden. Zu diesen 30 Codewörtern gehören weitere $2 \times 8$ Bit : 8 Bit für die Signalisierung und 8 Bit, die abwechselnd ein Rahmenkennungswort und ein Meldewort enthalten. Die 30 Codewörter bilden zusammen mit den weiteren $2 \times 8$ Bit einen Pulsrahmen. Die Pulsrahmen werden unmittelbar aneinandergereiht übertragen. Die Rahmenkennungswörter der

3

Pulsrahmen synchronisieren Sende- und Empfangsteile der PCM 30- Übertragungssysteme. Die Bits 2 bis 8 des Rahmenkennungswortes haben stets das gleiche Bitmuster : Die Empfangsteile bestimmen anhand der ankommenden Rahmenkennungswörter die zeitliche Lage der Pulsrahmen, damit die eintreffenden Bits in richtiger Folge den einzelnen Sprechkreisen zugeordnet werden können. Im Zeitkanal Null wird das Rahmenkennungswort abwechselnd mit dem Meldewort übertragen. Die Meldewörter übertragen Signale für bestimmte Dienste. Vermittlungstechnische Kennzeichen werden über den Zeitkanal 16 übertragen.

Über das zur zentralen Steuereinrichtung führende Datenübertragungsleitungsbündel DL werden Informationen in einem Nachrichtenformat mit variabler Datenlänge übertragen und zwar nach einem Hochpegel-Zeichengabeverfahren HDLC. Das Format der Informationen wird in einen 64-kbit/s-Bitstrom mit Hochpegeldatenübertragungssteuerung umgesetzt. Das Informationsformat ist in der Länge variabel von 5 bis 32 Byte und enthält in der Regel Adresse, Folgenummer, Prüfzeichen und die eigentliche Nachricht.

Bei den neuen digitalen Vermittlungssystemen ist die Einbringung neuer Dienste, die Erweiterungsfähigkeit der Hardware und Software sowie die Dezentralisierung der Logik und die hohe Betriebssicherheit bei einfacher Wartung sowie die Verringerung der Kosten von größerer Bedeutung. Die technischen Zielsetzungen sind in diesem Bereich ein wesentlich erhöhtes Maß an Flexibilität und Programmierbarkeit der Betriebszustände, vor Verarbeitung der peripheren Anreize, einfacher modularer Aufbau der Baugruppen und reduzierte Verdrahtung nach außen, sowie die Bereitstellung einer leistungsfähigen Schnittstelle zu abgesetzten, nicht zur Anlage gehörenden Einrichtungen und zur zentralen Steuerung. Auf diese Weise soll der unmittelbare Anschluß von digitalen Teilnehmerbaugruppen in einem voll digitalisierten Netz mit beliebiger Integrierung von Diensten möglich werden. Die in FIG 2 gezeigte Schnittstellenbaugruppe enthält als wichtigste Bestandteile eine Schnittstellenschaltung SIU, an der die Teilnehmer z. B. T1 und/oder Verbindungsleitungsübertragungen, z. B. die Amtsleitungsübertragung AU1 bzw. die Querverbindungsleitungsübertragung QU1 angeschaltet sind und über die zu den Teilnehmerendstellen bzw. zu den Verbindungsleitungsübertragungen und gegebenenfalls zu anderen Peripheriebausteinen der Datenaustausch erfolgt.

In der ersten Rahmenhälfte eines Pulsrahmens werden die Daten von der Schnittstellenbaugruppe SB zum entsprechenden Peripheriebaustein, z. B. zur Teilnehmerstelle, übertragen und in der zweiten Rahmenhälfte werden die im Peripheriebaustein, beispielsweise bei der Teilnehmerstelle bzw. bei der Verbindungsleitungsübertragung vorliegenden Daten zur Schnittstellenbaugruppe zurückgegeben. In der Schnittstellenbaugruppe wird ein 8 kHz-Signal zur Synchronisierung des Datenaustausches erzeugt. Die Datenübertragung erfolgt unabhängig vom Takt der Schnittstellenbaugruppe immer mit einem 512 kHz-Takt. Es werden synchron Daten in beiden Richtungen ausgetauscht und zwar jeweils 64 Kbit. Die Signalisierungsdaten werden in 8 bit/Rahmen in beiden Richtungen übertragen. Die Kontrolldaten werden in 1 byte/Rahmen ebenfalls in beiden Richtungen übertragen. Im Schnittstellenbaustein werden die jeweils ausgetauschten Daten zwischengespeichert. Hierzu sind pro Übertragungskanal (Sendekanal und Empfangskanal) sowie getrennt für die Signalisierungsinformationen abhängig von der Übertragungsrichtung entsprechende Zwischenspeicher vorgesehen ; d. h. ein A Empfangsregister zur Zwischenspeicherung der Daten, die im Kanal A empfangen werden. Das gleiche gilt für die im Kanal B übertragenen Informationen und ebenso für die empfangenen Signalinformationen. Das gleiche gilt für die umgekehrten Übertragungsrichtungen, denen auch jeweils entsprechende getrennte Speicher zugeordnet sind. Hierzu sei noch bemerkt, daß vom Peripheriebaustein, beispielsweise von einer Teilnehmerstelle, kommende Signalisierungsbytes in einem Speicher für die aktuellen Zustände der Peripheriebausteine aufgenommen wird. In einem zusätzlichen Speicher ist jeweils der vorhergehend, zuletzt festgestellte Zustand noch vorhanden und ein Vergleicher stellt durch Vergleich Zustandsveränderungen an der Teilnehmerstelle bzw. in der angeschalteten Verbindungsleitungsübertragung fest. Die Zustandsänderung wird in dem zuletzt genannten Zustandsspeicher gekennzeichnet. Von der Schnittstellenbaugruppe werden ohne Zwischenspeicherung in der Schnittstellenschaltung Kontrolldaten von dem Speicher FSP weitergegeben. Die ganzen Vorgänge über die Schnittstellenschaltung werden sowohl von der zentralen Steuerung ZS als auch von der der Schnittstellenbaugruppe SB zugeordneten peripheren Steuerung veranlaßt. Die LL-Logik überprüft laufend den Zustand der Speicher, die die Zustandsänderungen der Teilnehmerstellen bzw. Verbindungsleitungsübertragungen kennzeichnen. Jedem Ausgang zu einem Peripheriebaustein ist ein derartiger Zustandsspeicher zugeordnet. Wenn sich in einem solchen zugeordneten Speicher mindestens ein Bit ändert, wird in dem Zustandsspeicher das zugeordnete Bit gesetzt und diese Änderung durch interne Steuersignale den internen Steuerschaltmitteln SM der Schnittstellenbaugruppe mitgeteilt. Die Schnittstellenschaltung PIM verbindet die Schnittstellenbaugruppe SB mit dem Sprechwegekoppelnetzwerk SN. Diese Schnittstellenschaltung bewirkt in der Empfangsrichtung die Übernahme der seriellen Informationen mit der programmierten Taktflanke, ferner erfolgt die Serien-/Parallel-Umsetzung der ankommenden Daten und das Zwischenspeichern des Informationsbytes in einem entsprechenden Pufferspeicher. In der Senderichtung erfolgt eine Parallel-/Serien-Umsetzung der Informationen, eine Ausgabe der Daten mit der programmierten Taktflanke sowie das Erzeugen der Kontrollsignale zur Ansteuerung externer Treiberstufen und das Schalten der Ausgangsstufen.

Ferner ist ein Anpassungsspeicher CAM vorgesehen, der die Übertragung der empfangenen PCM-Informationen zwischen dem Sprechwegekoppelnetzwerk und den Teilnehmer-/Verbindungsleitungs-

übertragungsanschlüssen steuert. Der Speicherumfang beträgt 4 × 8 Byte und betrifft die Senderichtung für Kanal A mit Zwischenspeicher CAMØ, die Senderichtung B mit Zwischenspeicher CAM1, die Empfangsrichtung A mit Zwischenspeicher CAM2 und die Empfangsrichtung B mit Zwischenspeicher CAM3. Jedem der an einer Schnittstellenschaltung angeschalteten Peripheriebausteinen, z. B. Teilnehmer, ist eine entsprechende CAM-Zeile zugeordnet. Die Datenübertragung wird durch Eintragen des Zeitschlitzes und das PCM-Kanals auf die Adresse des zugeordneten Teilnehmers im entsprechenden CAM gekennzeichnet. In dem jeweils vorgesehenen Zwischenspeicher CAM, z. B. CAMØ, kann die Datenübertragung zwischen der peripheren Steuerung MP und den Übertragungskanälen programmiert werden. Jeder Zwischenspeicher CAM, z. B. CAMØ, wird in jedem Zeitschlitz vollständig ausgelesen und ausgewertet. Die Informationsübertragung in beiden Richtungen wird in Abhängigkeit davon durchgeführt.

Die Zeitschaltmittel ZM erzeugen alle aus einem Grundtakt zur Steuerung des PCM-Systems abzuleitenden Takte. Außerdem werden Takt- und Übernahmesignale für die Schnittstellen zu den Peripheriebausteinen und zum Sprechwegekoppelnetzwerk erzeugt. Die nach außen zu externen Peripheriebausteinen EP führenden Leitungen deuten an, daß die erzeugten Takte auch zur Steuerung dieser Bausteine zu verwenden sind. Im Speicher MO-A wird die Art des Austausches von Informationen mit variabler Datenlänge, sowie die Verwendungsweise des Speichers FXP festgelegt.

Die interne Datenübertragungsleitung PBC-B verbindet alle Funktionsteile des PCM-Synchronblockes der Schnittstellenbaugruppe SB. Die Schnittstellen zum Asynchronteil bilden die Speicher FSP, FXP und die Umsetzeinrichtung BIR. Dieses interne Datenübertragungsleitungsbündel PBC-B wird über indirekte Adressierung von der Schnittstellenschaltung MI der peripheren Steuerung erreicht. Das interne Datenübertragungsleitungsbündel wird im Zeitmultiplex betrieben. In der einen Zeitschlitzhälfte wird der Synchronverkehr, d. h. die PCM-Informationsübertragung und in der anderen Zeitschlitzhälfte der Asynchronverkehr, d. h. werden die Asynchroninformationen übertragen. Auf diese Weise wird intern ein optimaler Datendurchsatz erreicht, ohne daß der Zugriff von den Rechnerschnittstellen beeinflußt wird.

Die über das Datenübertragungsleitungsbündel DL zur zentralen Steuerung übertragenen Daten gehören zu dem sogenannten Asynchronteil. Über diese Datenübertragungsleitung werden Informationen in einem Nachrichtenformat mit variabler Datenlänge (HDLC-Prozedur) übertragen. Die entsprechende Sende- und Empfangseinrichtung HDP dient dem Austausch von Signalisierungs- und Steuerinformationen im entsprechenden Nachrichtenformat über eine serielle, entsprechende Schnittstelle. Die Empfangseinrichtung hat folgende Aufgaben : Erkennung der Markierungskennzeichen ; Erkennung einer individuellen Adresse ; eine Nullstellfunktion ; eine Serien-/Parallel-Umsetzung ; eine Abspeichern der entsprechenden Befehle in einem Empfangs-Befehlsspeicher RHCR ; ein Abspeichern des Anwenderbefehles im Empfangsbefehlsspeicher RPCR ; ein Zwischenspeichern weiterer Informationbytes im Empfangshaltespeicher RHR ; eine Redundanzprüfung ; eine Rahmenprüfung ; eine Umschalten zwischen den PCM-Übertragungswegen 0 und 1 im normalen Kanalbetrieb.

Die Sendeeinrichtung hat folgende Aufgaben : Selbstständige Steuerung des Übertragungsvorganges ; Nullstellfunktion ; Parallel-/Serien-Umsetzung ; selbsttätige Anforderung des Informationen von den verschiedenen internen Informationsquellen ; Sendung des Inhaltes des Übertragungsbefehlsregisters der betreffenden Sendeeinrichtung, wenn der Sendevorgang von der internen Steuerung veranlaßt wurde ; Sendung des Inhaltes des Sendebefehlsspeichers XPCR als Anwenderbefehl ; Heranfügen eines Blockprüfzeichens CRC am Ende des Informationsrahmens und bei normalem Kanalbetrieb das Senden über den ausgewählten PCM-Übertragungsweg 0 oder 1.

Die Speicher MSP der internen Steuerung kontrollieren die logische Ebene der Prozedur für die Übertragung von Informationen mit variabler Datenlänge (HDLC-Prozedur). Die aus dem Anwenderbefehl auf interne Zustände folgenden Vorgänge in Bausteinen werden ebenfalls von den genannten Speichern kontrolliert. Die vorgenannten Vorgänge dienen im wesentlichen zur Verteilung der empfangenen Informationspakete und zur Zusammenstellung der an die zentrale Steuerung zu übertragenden Informationspakete. In der Sende- und Empfangseinrichtung sind die Anwenderbefehle auszuwerten, ist das Anschalten der angeforderten Informationsquelle an den Übertragungspufferspeicher durchzuführen, ist das Weiterschalten der ankommenden Informationen im Empfangspufferspeicher an die Informationssenke durchzuführen, sind die Sende- und Quittungssignale zu erzeugen bzw. auszuwerten, sind die Funktionen einer Steuerung mit vielen Ausgängen für die Übertragung durchzuführen, ist die Datenübergabe an die periphere Steuerung durchzuführen und ist die Datenübergabe an den Synchronteil der Sende- und Empfangseinrichtung durch Austausch von Steuersignalen durchzuführen.

Ferner ist in der logischen Ebene die Auswertung der Befehle der Sende- und Empfangseinrichtung notwendig, ist das Starten des Sendevorgangs erforderlich und ist die Zusammenstellung des Antwortpaketes einschließlich des Informationsbytes notwendig, welches die Anwenderantwort enthält.

In der Schnittstellenschaltung MI zur peripheren Steuerung ist die Ansteuerung und die Zwischenspeicherung für die über die entsprechende Datenübertragungsleitung MD zu übertragenden Informationen festgelegt. Die Steuerlogik für dieses Datenübertragungsleitungsbündel MD verwendet die Signale von der Datenübertragungsleitung der peripheren Steuereinrichtung zur Ansteuerung der internen Funktionsblöcke. Die Freigabe erfolgt durch das normalerweise aus einer Adreßcodierung gewonnene CS-Signales. Mit einem aktiven WR-Signal übergibt die periphere Steuereinrichtung Informationen an die Schnittstellenbaugruppe, während mit dem Signal RD die Informationen abgerufen werden.

Die MSP-Speicher der peripheren Steuerung sind mit direkter Ansteuerung zugänglich. Durch Programmierung der Befehlsspeicher wird ein Teil des funktionellen Verhaltens der Schnittstellenbaugruppe festgelegt. Über die Zustandsspeicher werden Informationen an die periphere Steuerung MP zurückgemeldet. Der Adressenspeicher dient der Zwischenspeicherung von Adreßinformationen. Die vorgenannten Speicher sind mit SP1 bzw. SP2 bezeichnet.

Durch Übergabe von Befehlen in das Register MPC des Speichers SP1 werden die Funktionen der Steuerung für die zwischen der internen Steuerung und die Steuer- und Empfangsmittel HDP auszutauschenden Informationen gesteuert. Durch Setzen einzelner Bits in dem genannten Register MPC werden die Funktionen der Steuerschaltmittel SM eingeleitet. Die eingeleiteten Steuervorgänge können durch ein Zurücksetzen der Software unterbrochen werden. Der Registerteil TRC des Speichers SP1 dient der Durchschaltung der 64 kbit-Kanäle zur Schnittstellenschaltung MI der internen Steuerung. Im Speicher SP2 ist in einem Zustandsregister 1 (Status 1) eine Kennzeichnung für die Ursache der Unterbrechung der internen Steuerung gespeichert. Ein entsprechend gesetztes Bit steuert die Unterbrechung der internen Steuerung. Durch das Lesen dieses Zustandsregisters (Status 1) werden die Zustandsbits abhängig von der der internen Steuerung übergebenen Informationen individuell zurückgesetzt. Durch das zweite Zustandsregister (Status 2) des Speichers SP2 können einzelne Bits des Zustandsregisters 1 (Status 1) maskiert werden. Im Zustandsregister 2 (Status 2) sind Informationen abgelegt, die die interne Steuerung bei Bedarf ohne Aufforderungsunterbrechung abholen kann. Der entsprechende Inhalt wird durch die Zustände der Schnittstellenschaltung BER zwischen dem internen Datenübertragungsleitungsbündel PBC-B und dem Datenübertragungsleitungsbündel für Informationen der zentralen Steuerung, der vorgesehenen Sendeschaltmittel und des Sendespeichers FXP beeinflußt. Der Registerteil EDR des Speichers SP2 beinhaltet Fehlerursachen und dient der näheren Definierung des im Zustandsregister 1 (Status 1) gesetzten Bits für die Fehlerkennzeichnung. Nach einem Auslesen des Registers EDR werden alle Bits zurückgesetzt. Eine aus dem Register TAR des Speichers SP2 ausgelesene Information dient der Durchschaltung von 64 kbit-Kanäle zwischen der Schnittstellenschaltung MI für die interne Steuerung und den Teilnehmer-/Verbindungssatzanschlüssen bzw. dem Sprechwegekoppelnetzwerk.

Dem Register ABR des Speichers SP1 dient der Aufnahme indirekter Adressen, während das Register ADR des Speichers SP2 der Aufnahme der der Schnittstellenbaugruppe zugeordneten, spezifischen Adresse dient.

Der Sendespeicher FXP ist ein 16-Byte-Flipflopspeicher und dient im Normalbetrieb der Zwischenspeicherung von Informationspaketen, die der internen Steuerung bereitzustellen sind und von diesem über die Sende- und Empfangseinrichtung HDP des Datenübertragungsleitungsbündels DL abgerufen werden. Diese Art von Informationen können als « Direktinformation » bezeichnet werden und werden über das Datenübertragungsleitungsbündel DL in einem Nachrichtenformat mit variabler Datenlänge (HDLC-Prozedur) übertragen. Diese Informationen werden abhängig von der Einstellung des Zustandsregisters MO-A entweder von der Zustandslogik LL-Logik über das interne Datenübertragungsleitungsbündel PBC-B eingeschrieben oder von der internen Steuerung als Informationsblock mit direkter Adressierung der Schnittstellenbaugruppe zur Verfügung gestellt. Werden in Abhängigkeit des Programms der internen Steuerung 64 k-Baud-Kanäle zwischen dem Sprechwegekoppelnetzwerk und der Schnittstellenschaltung der internen Steuerung durchgeschaltet, so dient der Sendespeicher FXP der Zwischenspeicherung der anfallenden Programmunterbrechungsadressen, bevor diese über das Sende-Adressenregister TAR des Speichers SP2 der internen Steuerung MP weitergegeben werden. In diesem Betriebsfall steht der Sendespeicher FXP nicht der Pufferung von Sendedaten zur Verfügung.

Im doppeltgerichteten Speicher FSP für Steuerdaten können bis zu 16 Nutzbytes zwischengespeichert werden. Dieser Speicher FSP wird direkt adressiert und dient dem Informationsaustausch zwischen der zentralen Steuerung über die Sende- und Empfangseinrichtung HDP und der internen Steuerung über das Datenübertragungsleitungsbündel bzw. mit den an dem internen Datenübertragungsleitungsbündel PCB-B angeschalteten Einrichtungen.

| Empfänger / Sender | FXP | FSP | SIU | CAM |
|---|---|---|---|---|
| HDP | | | x | |
| FSP | | | x | x |
| SIU | x | x | | |
| CAM | | x | | |

Über den doppeltgerichteten Speicher FSP für Steuerinformationen ist der Austausch von Informationen möglich. Die Steuerung dieses Speichers wird von der der internen Steuerung zugeordneten Steuereinrichtung MSP übernommen. Die Übergabe von Steuerinformationen von und zu dem Speicher FSP erfolgt mittels des Zustandsregisters (Status 1) mit einem Unterbrechungsbefehl bzw. mit einem Befehl des Registers MPC bzw. mit einem Befehl bzw. einem Rückkriterium der zentralen Steuerung oder mit internen Steuersignalen der Schnittstellenbaugruppe SB. Die Schnittstellenschaltung MI der internen Steuerung MP steuert die zum PCM-Zeitraster asynchrone Informationsübertragung über das interne Datenübertragungsleitungsbündel PBC-B und erfüllt dabei folgende Aufgaben :

Auswerten der Schnittstellenbaugruppeninformationen, die Anwenderbefehle betreffen, sowie das Verteilen der im doppeltgerichteten Speicher FSP zwischengespeicherten Informationen der Schnittstellenbaugruppe und ferner das Abspeichern der pro Schnittstellenbaugruppenbefehl angeforderten internen Informationen in den doppeltgerichteten Speicher FSP, die Steuerung der Datenübertragung bei indirekter Adressierung, die Steuerung der Zustandslogik (LL-Logik), das Abspeichern der Signalisierungsinformationen im Sendespeicher FXP, die Durchführung der Aufnahme der Signalisierungsinformationen ohne Zwischenspeicherung und zuletzt die Koordinierung der einzelnen Übertragungsarten (PCM-Verfahren und HDLC-Prozedur) mittels einer Prioritätslogik.

Ein asynchroner Informationsaustausch ist zwischen folgenden Einrichtungen möglich :

| Empfänger / Sender | FXP | FSP | SIU | CAM |
|---|---|---|---|---|
| HDP | | | x | |
| FSP | | | x | x |
| SIU | x | x | | |
| CAM | | x | | |

Die Schnittstellenschaltung BIR zwischen dem internen Datenübertragungsleitungsbündel PBC-B und dem Datenübertragungsleitungsbündel MD der internen Steuerung dient als Schnittstelleninformationszwischenspeicher mit indirekter Adressierung. Dieser Zwischenspeicher wird von der Schnittstelle der internen Steuerung aber über direkte Adressierung erreicht. Der Informationsaustausch zwischen diesem Schnittstelleninformationszwischenspeicher BIR und einem Speicher, in dem die Ziele bzw. die Ursprünge gespeichert sind, wird von den Steuerschaltmitteln SM veranlaßt und gesteuert.

Das funktionelle Verhalten der Schnittstellenbaugruppe SB wird zum einen bestimmt durch die Initialisierung und die statische Einstellung und zum anderen durch die Übergabe von Parameteradressen und Steuerbefehlen, die von der internen Steuerung selbst bzw. über diese von der zentralen Steuerung über die serielle Schnittstelle für die Informationen mit dem Nachrichtenformat mit variabler Datenlänge übergeben werden. Für die Übernahme von Informationen über das Datenübertragungsleitungsbündel ist die Schnittstellenbaugruppenadresse, die Schnittstellenbaugruppenart und die Steuerart zu kennzeichnen und sind ferner die Eigenschaften der Sende- und Empfangseinrichtung HDP, beispielsweise das Teilerverhältnis des Informationstaktes und der Schnittstellenanschluß zu kennzeichnen. Die entsprechenden Vorgaben werden über die Schnittstelle der internen Steuerung von der Inbetriebnahme der Schnittstellenbaugruppe vorgenommen. Ist die interne Steuerung angeschlossen, so erfolgt die Einstellung durch Übergabe der entsprechenden Informationen seitens der internen Steuerung. Vor der Inbetriebnahme sind dann noch eine Reihe von Anweisungen in den vorhandenen Registern aufzunehmen. Diese Anweisungen dienen der statischen Einstellung und ändern sich im Normalfall während des Betriebes nicht. Zu den Anweisungen gehören beispielsweise die Kennzeichnung der Art des PCM-Systems, die Kennzeichnung der zeitlichen Lage des Strobe für Signalisierung, die Kennzeichnung der Art und Periode der Zustandsbearbeitung der LL-Logik, die Kennzeichnung des Zeitsteuertaktes der PCM-Sprechwegeanschlüsse und so weiter. Ferner gehört zu den Anweisungen die Kennzeichnung der Steuerung der $16 \times 64$ kbit-Kanäle zwischen Teilnehmer und Sprechwegekoppelnetzwerk. Diese sind im Anpassungsspeicher CAM gespeichert.

Mit den vorgenannten Einstellungen ist die Schnittstellenbaugruppe in der Lage, die Steuerung der Sprach-, Informations- und Signalisierungswege durchzuführen. Dabei werden die notwendigen Parameterbefehle und Steuerbefehle der Schnittstellenbaugruppe in Form von Anwenderbefehlen von der zentralen Steuerung geliefert. Zum Zwecke einer funktionellen Erweiterung ist der Anschluß einer zusätzlichen Steuerung in Form eines Mikrocomputers an die parallele Schnittstelle EP möglich. Die interne Steuerung, die auch als Mikrocomputer ausgeführt ist, hat die Möglichkeit, die Schnittstellenbaugruppe über direkt adressierbare Register zu steuern bzw. Zustände abzufragen und damit folgende interne Abläufe einzuleiten bzw. zu beeinflussen und zwar der interruptgesteuerte Zugriff auf Zustandsdaten (LL-Logik), der interruptgesteuerte Zugriff auf sprechwege- und teilnehmer-seitige 64-kbit-Kanäle, der Austausch von Informationspaketen zwischen der Schnittstellenbaugruppe und der zentralen Steuerung, sowie die Erweiterung der logischen Ebene des Datenaustausches im Nachrichtenformat mit variabler Datenlänge (HDLC-Prozedur).

Aus dem Vorstehenden geht hervor, daß es sich bei der beschriebenen Schnittstellenbaugruppe SB um eine Baugruppe handelt, welche eine Gruppe von Teilnehmern bzw. eine Gruppe von Leitungsübertragungen bzw. eine kombinierte Gruppe von Teilnehmern und Leitungsübertragungen, beispielsweise 8 bzw. 16 zugeordnet wird. In Abhängigkeit der Größe der Anlage sind eine entsprechende Vielzahl solcher Schnittstellenbaugruppen vorhanden. Diese Schnittstellenbaugruppen sind entweder über Gruppenkoppler, bei größeren Anlagen bzw. direkt, bei kleineren Anlagen, mit einem Sprechwegekoppelnetzwerk SN, wie in FIG 1 dargestellt, verbunden. Die vorgenannte Schnittstellenbaugruppe SB ist also gemeinsam einer Gruppe von Teilnehmern und/oder Leitungsübertragungen zugeteilt und sowohl mit dem Sprechwegekoppelnetzwerk über entsprechende Leitungen für die Übertragung der Sprachinformationen im Pulscodemodulationsverfahren und auch zur Übertragung von sonstigen Daten im Pulscodemodulationsverfahren, als auch mit einem Datenübertragungsleitungsbündel, welches zur zentralen Steuerung führt, verbunden. Die Informationen über das genannte Datenübertragungsleitungsbündel DL werden in einem Nachrichtenformat mit variabler Datenlänge (HDLC-Prozedur) übertragen. Das Nachrichtenformat ist in der Länge von 5 bis 32 byte variabel und enthält Adresse, Folgenummer, Prüfzeichen und die eigentliche Nachricht. Jeder Schnittstellenbaugruppe SB ist eine Schnittstellenschaltung SIU zugeordnet, welche das Senden zu bzw. Empfangen von den Teilnehmerleitungen, z. B. T1, und/oder den Leitungsübertragungen, beispielsweise Amtsleitungsübertragung AU1, Querverbindungsleitungsübertragung QU1, und das Zwischenspeichern dieser Sprach- und Signalinformationen und gegebenenfalls das Umsetzen analoger Informationen in Digitalinformationen und umgekehrt und auch das Zustandsüberwachen der angeschalteten Teilnehmerendgeräte und der Verbindungsleitungsübertragungen übernimmt. Die zuletzt genannte Überwachung erfolgt in Verbindung mit der vorgesehenen Zustandslogik LL-Logik, wozu ein Informationsaustausch über das interne Datenübertragungsleitungsbündel PBC-B erforderlich ist. Die Übertragung der Informationen zu den Teilnehmerendstellen und zu den Verbindungsleitungsübertragungen sowie zur Zustandslogik erfolgt in Abhängigkeit von Steuerbefehlen der zentralen Steuerung ZS und in Abhängigkeit einer der Schnittstellenbaugruppe SB zugeordneten, über das interne Datenübertragungsleitungsbündel PBC-B und über das zusätzlich zugeordnete Datenübertragungsleitungsbündel MD angeschalteten, peripheren Steuerung MP. Die periphere Steuerung besteht in der Regel aus einem Mikrocomputer, in der Form, wie sie auf dem Markt erhältlich sind, z. B. Intel 8080. Die periphere Steuerung MP wird über die zugeordnete Schnittstellenschaltung MI und die entsprechende Treiberschaltung MDD mit dem zugeordneten Datenübertragungsleitungsbündel MD der internen Steuerung MP verbunden.

Ferner geht aus dem Vorstehenden hervor, daß die Schnittstellenbaugruppe SB Zeit- und Steuerschaltmittel ZM, SM für das pulscodierte Senden und Empfangen von Sprachinformationen zum Sprechwegekoppelnetzwerk bzw. von Sprechwegekoppelnetzwerk über die PCM-Schnittstellenschaltung PIM zugeordnet sind, die ebenfalls mit dem internen Datenübertragungsleitungsbündel PBC-B in Verbindung stehen.

Der Schnittstellenbaugruppe SB ist eine dem Datenübertragungsleitungsbündel DL zugeordnete Sende- und Empfangseinrichtung HDP für den Empfang und das Senden von Informationen zwischen der zentralen Steuerung und der peripheren Steuerung MP in einem Nachrichtenformat mit variabler Datenlänge (HDLC-Prozedur) zugeordnet, welche ebenfalls mit den internen Datenübertragungsleitungsbündel PBC-B in Verbindung steht. Diese Sende- und Empfangseinrichtung ist aber zusätzlich mit dem vorstehend beschriebenen, doppeltgerichteten Speicher FSP für Steuerinformationen verbunden, in dem Informationen zwischengespeichert und in Abhängigkeit der peripheren Steuerung der Sende- und Empfangsrichtung zugeordnet werden und dann in Abhängigkeit der der Schnittstellenbaugruppe SB zugeordneten Zeit- und Steuerschaltmittel Zm, SM für das pulscodierte Senden über das Sprechwegekoppelnetzwerk bzw. für das Umsetzen pulscodiert über das Sprechwegekoppelnetzwerk empfangenen Signale bereitgestellt werden. Die pulscodiert übertragenen Daten, die über das Sprechwegekoppelnetzwerk gesendet bzw. empfangen werden, sind Daten, die, beispielsweise über das interne Datenübertragungsleitungsbündel bzw. über eine Schnittstellenschaltung, beispielsweise SIU von einer peripheren Einrichtung übertragen werden. Diese über das Sprechwegekoppelnetzwerk übertragenen Informationen werden von der Schnittstellenschaltung SIU verarbeitet und gegebenenfalls einem Rechner bzw. einem Auswertegerät zugeführt. Bei diesen Daten handelt es sich beispielsweise um Ferndaten, die aussagen, über Störungen, Prüfungen, Feuer und sonstige Überwachungen betreffen.

Der Austausch der vorstehend genannten Informationen im normalen Kanalbetrieb über die im Pulscodemodulationsverfahren betriebenen Kanäle erfolgt in zwei frei programmierbaren Zeitschlitzen, über einen der beiden PCM-Übertragungswege A bzw. B. In einem solchen Falle werden die Informationen an den zu der Datenübertragungsleitung DL führenden Anschlüsse ungültig. Voraussetzung für die Übertragung der Informationen über die Sprechwege ist das Vorhandensein der internen Steuerung (Mikroprozessor), der zusammen mit den Zeit- und Steuerschaltmitteln ZM, SM für die Auswahl des belegbaren PCM-Kanals sorgt. Über den Speicher MO-A wird in Zusammenarbeit mit den Steuerschaltmitteln SM und mit den in der Zeitschalteinrichtung ZM vorhandenen Kanalspeicher in den programmierten Zeitschlitzen eine Freikennung erkannt. Ist dies der Fall, so wird die Sende- und Empfangseinrichtung HDP für die entsprechende Belegung des gewählten PCM-Kanals programmiert. Die Belegung bleibt solange bestehen, bis eine Freigabe veranlaßt wird. Die Belegung eines freien Kanals durch die Sende- und Empfangseinrichtung HDP wird von der internen, peripheren Steuerung MP veranlaßt. Für die Belegung eines freien Kanals müssen zwei beliebige Zeitschlitze in den Kanalspeichern CHR1 und CHR2 mittels indirekter Adressierung eingetragen werden. Ist dies geschehen, so werden von der PCM-Schnittstelle PIM die ankommenden Informationen als Informationen erkannt, die als variable Daten über die Sende- und Empfangseinrichtung HDP zu verarbeiten sind. Entsprechend wird auch die Übertragung der Informationen mit variablen Datenlängen in bestimmten Zeitschlitzen bestimmter Länge im ausgewählten Kanal und in aufeinanderfolgenden Rahmen übertragen. Die Datenübertragungsgeschwindigkeit beträgt dabei maximal $2 \times 64$ Kbit/Sekunde pro Richtung.

Anstelle der programmierbaren Zeitschlitze kann auch ein Betrieb gewählt werden mit je einem Empfang- und einem Sende-Zeitschlitz. Bei dieser Betriebsart wird der in einem der Kanalspeicher z. B. CHR1 eingetragene Wert als Empfangszeitschlitz und der im anderen Kanalspeicher CHR2 eingetragene Wert als Sendezeitschlitz interpretiert. Es werden zur die im Empfangs-Zeitschlitz am gewählten PCM-Kanal ankommenden Informationen zur internen Sende- und Empfangseinrichtung HDP durchgeschaltet und nur im Sende-Zeitschlitz werden entsprechende Informationen, die von der Sende- und Empfangseinrichtung HDP kommen, herausgegeben. In diesem Falle beträgt die Datenübertragungsgeschwindigkeit maximal $1 \times 64$ Kbit/Sekunde pro Richtung.

Wird der Kanalbetrieb im Zeitschlitz N programmiert, so kann die zeitliche Lage des gesendeten und empfangenen Informationsstromes sowie der Übernahmeflanken abhängig vom Binärcode dreier vorhandener Bits X-SHIFT bzw. R-SHIFT vorgenommen werden. In diesem Zusammenhang wird auf die FIG 3 verwiesen.

Die Schnittstellenbaugruppe SB ist konzipiert als lokale Steuerung, welche von der übergeordneten Steuerung MP kontrolliert wird. Alle Funktionen laufen in Zusammenarbeit mit dieser internen Steuerung MP (Mikrocomputer), der einerseits die Aufgaben der peripheren Vorverarbeitung von Informationen übernimmt, andererseits auch der Aufweitung der Ablaufverfahren auf ein volles Informationspaket für die Sende- und Empfangseinrichtung HDP dient. Die Informationsübertragung erfolgt über die bereits genannten Datenübertragungsleitungen MD und PBC-B. Nur unbekannte Befehle werden zur Bearbeitung der zentralen Steuerung der Fernsprechanlage, insbesondere Fernsprechnebenstellenanlage, übergeben. Der Standardrahmen eines Nachrichtenformats mit variabler Datenlänge besteht aus Startkennzeichen, 8-Bit-Adreßfeld, 8-Bit-Steuerfeld, Informationsfeld, 16-Bit-CRC-Feld und Endkennzeichnen. Das führende Bit ist das geringstwertige Bit mit Ausnahme des CRC-Feldes, in dem das führende Bit das höchstwertige Bit ist. Die Sende- und Empfangseinrichtung wird über den Empfangsweg nur angesprochen, wenn das Adreßfeld entweder die eigene im Register ADR eingetragene Adresse oder die besondere Anrufadresse (ØØH) enthält, sowie mindestens $4 \times 8$ bit-Worte in den S- und U-Rahmen zwischen dem Start- und Endkennzeichen und bei I-Rahmen mindestens $5 \times 8$ bit-Worte liegen und kein CRC-Fehler vorliegt. Zur Steuerung der Übertragungsstrecke über das Datenübertragungsleitungsbündel DL sind I-, S- und U-Rahmen vorgesehen, wobei die S- und U-Rahmen Steuerinformationen und die I-Rahmen Nutzdaten enthalten. Aus diesem vorhandenen Befehlsspektrum kann die Schnittstellenbaugruppe Befehle decodieren und ohne Unterbrechung der zentralen Steuerung senden.

Wird angenommen, daß Informationen über die Sende- und Empfangseinrichtung HDP einem PCM-Kanal des über das Sprechwegekoppelnetzwerk geführten Sprechweges geführt werden muß, so werden entsprechende Vorbereitungssignale für die Vorbereitung der Belegung eines freien Kanals erzeugt. Als Reaktion auf diese Befehle werden die schnittstellenbaugruppeninternen Daten im doppeltgerichteten Speicher FSP abgespeichert und zum Senden bereitgestellt. Das Informationsfeld dieser Befehle enthält jeweils ein Byte mit dem Operationscode und der Ursprungsadresse. Zur Vorbereitung der Belegung, z. B. des Kanals B, wird die Zeitschlitzzuordnung kontrolliert und werden die Speicher CAM1 (Empfang) und CAM3 (Senden) des Anpassungsspeichers CAM für den belegenden B-Kanal-Teilnehmer gelesen und diese Informationen werden im Speicher FSP aufgenommen. Anschließend wird die Einstellung der internen Speicher und Register kontrolliert. Der Inhalt des durch den Anpassungsspeicher adressierten besonderen Speichers wird im doppeltgerichteten Speicher FSP aufgenommen. Die Länge der gespeicherten Information ist ein Byte. Mit einem Vorbereitungssignal wird ein Signalisierungsspeicher kontrolliert und mit einem Befehl gezielt das ankommende Signalbyte des den Kanal belegenden Teilnehmers ebenfalls im doppeltgerichteten Speicher FSP gespeichert. Ferner wird die Zeitschlitzzuordnung kontrolliert, indem die Speicher CAM1 (Empfang) und CAM2 (Senden) für den durch den bezeichneten A-Kanal-Beleger eingestellten Verbindung gelesen und ebenfalls in dem doppeltgerichteten Speicher FSP aufgenommen. Die empfangenen Informationen enthalten einen Befehl und ein Informationsfeld, bestehend aus 1 bis 16 Bytes, welche im Speicher FSP gespeichert werden. Durch einen entsprechenden Befehl der internen Steuerung wird ein Ablauf ausgelöst, bei dem die Daten von dem doppeltgerichteten Speicher FSP an das eigentliche Ziel übertragen werden. Beim Empfang peripherer Befehls-Vorbereitungssteuerdaten werden die Kontrolldaten aus den Peripheriebausteinen erneut herausgelesen. Abhängig vom Kontroll-Wort wird eine definierte Anzahl der von dem Peripheriebaustein zurückgesendeten Einstelldaten im Speicher FSP zwischengespeichert. Nach Abschluß dieses Vorganges befindet sich im Speicher FSP das gespiegelte Kontroll-Wort und abhängig von diesem weitere zwei, sechs, zehn oder vierzehn Datenbytes. Die Zustandslogik LL-Logik ist auf einen auswählbaren Ausgangswert zurückzusetzen. In den vorhandenen Speichern werden die Bytes aller interner Speicher und Register, die für eine oder mehrere dieser Speicher oder Register bestimmt sind, in einer Meldung verpackt. Diese Bytes werden auf entsprechende besondere Register verteilt. Beim Aufbau einer Verbindung für einen A-Kanal-Teilnehmer kann die Länge des Datenfeldes variabel zwischen 2 bis 14 Bytes liegen. Das erste Datenbyte wird in die bezeichnete Adresse des Speichers CAM1 (Empfang) geschrieben, das zweite Byte in den Speicher CAM2 des Anpassungsspeichers CAM. Weitere Bytes

**0 113 884**

werden an den Peripheriebaustein als Einstelldaten gesendet, pro Rahmen ein Byte. Wenn eine schnelle Verbindung für einen B-Kanal-Teilnehmer aufgebaut wird, kann die Länge des Datenfeldes ebenfalls variabel sein.

**Patentanspruch**

Fernmeldeanlage, insbesondere Fernsprechnebenstellenanlage, mit Teilnehmer- und Leitungsübertragungsgruppen, wobei die jeweiligen Gruppen und kombinierte Teilnehmer-/Leitungsübertragungsgruppen über jeweils eine gemeinsame Schnittstellenbaugruppe (SB1, SB2, SBx) pro solcher Gruppe sowohl mit einem Sprechwegekoppelnetzwerk (SN) als auch über ein Datenübertragungsleitungsbündel (DL) mit einer für die Verbindungswegeherstellung der ankommend bzw. abgehend belegbaren Teilnehmer- bzw. Verbindungsleitungen vorgesehenen zentralen Steuerung (ZS) in Verbindung stehen und wobei Informationen über das Sprechwegekoppelnetzwerk (SN) im Pulscodemodulationsverfahren und Informationen über das Datenübertragungsleitungsbündel (DL) in einem Nachrichtenformat mit variabler Datenlänge (HDLC-Prozedur) übertragen werden und wobei ferner jede Schnittstellenbaugruppe eine Schnittstellenschaltung (SIV) zur Abwicklung des Sprach- und Signalinformationsverkehrs mit den Teilnehmern und/oder Verbindungsleitungen zugeordneten Anschlußbaugruppen aufweist und die Übertragung dieser Sprach- und Signalinformationen in Abhängigkeit von Steuerbefehlen der zentralen Steuerung (ZS) und einer der Schnittstellenbaugruppe (SB) zugeordneten, über ein schnittstellenbaugruppeninternes Datenübertragungsleitungsbündel (PCB-B) mit der Schnittstellenschaltung (STU), mit dem Sprechwegekoppelnetzwerk (SN) und mit dem Datenübertragungsleitungsbündel (DL) in Verbindung stehenden, peripheren Steuerung (ZS) erfolgt, dadurch gekennzeichnet, daß das schnittstellenbaugruppenindividuelle Datenübertragungsleitungsbündel als Bussystem (PCB-B) ausgelegt ist, mit dem
— eine periphere Schnittstellenschaltung (MI) für die periphere Steuerung (MP),
— Zeit- und Steuerschaltmittel (ZM, SM) für das Senden und Empfangen pulscodierter Sprachinformationen,
— eine dem Datenübertragungsleitungsbündel (DL) zugeordnete Sende- und Empfangseinrichtung (HDP) für den Empfang und das Senden von Informationen zwischen der zentralen Steuerung (ZS) und der peripheren Steuerung (MP) in einem Nachrichtenformat mit variabler Datenlänge (HDLC-Prozedur)
— und ein für die Aufnahme von Informationen im Nachrichtenformat mit variabler Datenlänge (HDLC-Prozedur) vorgesehener Speicher (FSP), in dem diese Informationen zwischengespeichert und in Abhängigkeit von der peripheren Steuerung (MP) der Sende- und Empfangseinrichtung (HDP) zugeführt und der in Abhängigkeit von den Zeit- und Steuerschaltmitteln (ZM, SM) für das pulscodierte Senden über das Sprechwegekoppelnetzwerk (SN) bzw. für das Umsetzen pulscodiert über das Sprechwegekoppelnetzwerk (SN) empfangener Signale bereitgestellt wird,
verbunden sind.

**Claim**

A telecommunications system, in particular a telephone private branch exchange, with subscriber- and line circuit groups, where the respective groups and combined subscriber-/line circuit groups are each connected via a common interface assembly (SB1, SB2, SBx) provided for each such group to a speech path switching network (SN) and via a data transmission line group (DL) to a central control unit (ZS) which is provided for the establishment of connection paths for the subscriber- and connection lines which can be seized in the incoming and outgoing directions, and where information items are transmitted via the speech path switching network (SN) in accordance with the pulse code modulation procedure and information items are transmitted via the data transmission line group (DL) in a communications format with variable data length (HDLC-procedure) and where moreover each interface assembly comprises an interface circuit (SIV) for handling the speech- and signal information traffic with connector assemblies assigned to the subscribers and/or connection lines and the transmission of these speech- and signal information items takes place in dependence upon control commands of the central control unit (ZS) and a peripheral control unit (ZS) which is assigned to the interface assembly (SB) and is connected via an interface-assembly-internal data transmission line group (PCB-B) to the interface circuit (STU), to the speech path switching network (SN), and to the data transmission line group (DL), characterised in that the interface-assembly-individual data transmission line group is designed as a bus system (PCB-B) which is connected to
— a peripheral interface circuit (MI) for the peripheral control unit (MP),
— time- and control switching elements (ZM, SM) for the transmission and reception of pulse-coded speech information,
— a transmitting and receiving device (HDP), which is assigned to the data transmission line group (DL), and is provided for the reception and transmission of information between the central control unit (ZS) and the peripheral control unit (MP) in a communications format with variable data length (HDLC-procedure),

**0 113 884**

— and a store (FSP) which serves to receive information in the communications format with variable data length (HDLC-procedure) and in which this information is intermediately stored and, in dependence upon the peripheral control unit (MP), supplied to the transmitting- and receiving device (HDP), and which, in dependence upon the time- and control switching elements (ZM, SM), is made available for pulse-coded transmission via the speech path switching network (SN) and for the conversion of signals received in pulse-coded form via the speech path switching network (SN).

**Revendication**

Installation de télécommunications, notamment installation téléphonique à postes supplémentaires, comportant des groupes d'abonnés et des groupes de translateurs de ligne, dans laquelle les groupes respectifs et les groupes combinés d'abonnés/translateurs de ligne sont reliés par l'intermédiaire d'un module respectif commun d'interface (SB1, SB2, SBx) pour chaque groupe aussi bien à un réseau (SN) de couplage des voies téléphoniques que, par l'intermédiaire d'un faisceau (DL) de lignes de transmission de données, à un dispositif central de commande (ZS) prévu pour l'établissement des voies de liaison des lignes d'abonnés ou des lignes de jonction pouvant être occupées du côté arrivée ou du côté départ, et dans laquelle les informations concernant le réseau (SN) de couplage des voies téléphoniques sont transmises selon le procédé de modulation par impulsions codées et des informations concernant le faisceau (DL) de lignes de transmission de données sont transmises selon un format d'informations possédant une longueur de données variable (procédure HDLC), et dans laquelle, en outre, chaque module d'interface comporte un circuit d'interface (SIV) utilisé pour le déroulement du trafic des informations vocales et de signaux avec des modules de raccordement associés aux abonnés et/ou aux lignes de jonction, et la transmission de ces informations vocales et de signaux s'effectuent en fonction d'instructions de commande du dispositif central de commande (ZS) et d'un dispositif périphérique de commande (ZS), associé au module d'interface (SV) et relié par l'intermédiaire d'un faisceau (PCB-B) de lignes de transmission de données, prévu à l'intérieur du module d'interface, au circuit d'interface (STU), au réseau (SN) de couplage des voies téléphoniques et au faisceau (DL) de lignes de transmission de données, caractérisée par le fait que le faisceau de lignes de transmission de données, prévu individuellement pour chaque module d'interface, est agencé sous la forme d'un système de bus (PCB-B), auquel sont reliés
    — un circuit périphérique d'interface (MI) pour le dispositif périphérique de commande (MP),
    — des moyens de commutation temporelle et de commutation de commande (ZM, SM) pour l'émission et la réception d'informations vocales codées par impulsions,
    — un dispositif d'émission et de réception (HDP) associé au faisceau (DL) de lignes de transmission de données et utilisé pour la réception et l'émission d'informations entre le dispositif central de commande (ZS) et le dispositif périphérique de commande (MP), dans un format d'informations possédant une longueur variable de données (procédure HDLC), et
    — une mémoire (FSP), qui est prévue pour la réception d'informations possédant le format d'informations avec une longueur variable des données (procédure HDLC) et dans laquelle ces informations sont mémorisées temporairement et sont envoyées au dispositif d'émission et de réception (HDP) en fonction du dispositif périphérique de commande (MP), et qui est préparée en fonction des moyens de commutation temporelle et de commutation de commande (ZM, SM) pour l'émission, codée avec un codage d'impulsions, de signaux reçus par l'intermédiaire du réseau (SN) de couplage des voies téléphoniques, et pour la conversion, codées avec un codage d'informations, de signaux reçus par l'intermédiaire du réseau (SN).

11

FIG 1

FIG 2

0 113 884

TS N N+1 N+2 **FIG 3**

CP

IXHWD0/TXHWD1
DCX=0 } X-SHIFT=0
DCX=1

DCX=0 } X-SHIFT=1
DCX=1

DCX=0 } X-S=7
DCX=1

DCR=0 } R-SH=0
DCR=1

DCR=0 } R-SH=1
DCR=1

DCR=0 } R-SH=7
DCR=1